# EUROPÄISCHE PATENTSCHRIFT

(11) **EP 1 970 590 B1**
(45) Veröffentlichungstag und Bekanntmachung des Hinweises auf die Patenterteilung: **02.10.2013**
(21) Anmeldenummer: 08002921.8
(22) Anmeldetag: 18.02.2008
(51) Int. Cl.: F16D 48/02

(54) **Dämpfungseinrichtung für eine hydraulische Strecke zur Kupplungsbetätigung**
Dampening unit for a hydraulic line for coupling actuation
Dispositif d'amortissement pour une trajectoire hydraulique en vue de l'actionnement d'un embrayage

(30) Priorität: 12.03.2007 DE 102007011781; 24.05.2007 DE 102007024116
(43) Veröffentlichungstag der Anmeldung: 17.09.2008
(73) Patentinhaber: Schaeffler Technologies AG & Co. KG, 91074 Herzogenaurach (DE)
(72) Erfinder: Rammhofer, Thomas, 77880 Sasbach (DE); Grabenstätter, Jan, 76593 Gernsbach (DE)

(56) Entgegenhaltungen:
- BE-A- 707 157
- DE-A1- 10 059 382
- DE-A1- 10 106 958
- DE-A1- 19 829 124
- US-A- 3 451 422
- US-B1- 6 298 873

## Beschreibung

Die Erfindung betrifft eine Dämpfungseinrichtung für eine hydraulische Strecke zur Kupplungsbetätigung eines Kraftfahrzeuges mit den Merkmalen des Oberbegriffs des Anspruchs 1.

Aus dem Stand der Technik sind Einrichtungen zur Dämpfung von Druckstößen des Druckmediums bekannt, durch die einen bestimmten Druck überschreitende Druckspitzen gefiltert und geglättet werden. Diese Einrichtungen basieren auf dem Prinzip, dass das durchfließende Druckmedium kanalisiert entsprechenden Hindernissen in Form von Ventilen zugeführt wird. Das Druckmedium leitet den Druck sowohl vom Geberzylinder zum Nehmerzylinder als auch in umgekehrter Richtung. Allerdings werden die Druckspitzen in der hydraulischen Strecke, herrührend vom Kupplungsvorgang, vom Nehmerzylinder auf den Geberzylinder und weiter auf das Kupplungspedal übertragen, wo sie vom Fahrer als unangenehm empfunden werden. Daher sind diese Ventile paarweise angeordnet, so dass jeweils ein Ventil eine Durchflussrichtung absperrt. Übersteigt der Druck des Druckmediums nehmerzylinderseitig den zulässigen Druck, öffnet ab diesem Druck das entsprechende Ventil und das Druckmedium fließt über dieses Hindernis gefiltert weiter zum Geberzylinder.

In der DE 10 2005 020 853 B3 wird eine auf diesem Prinzip basierende Dämpfungseinrichtung beschrieben, die als schaltbare Ventilanordnung zwischen einem Geber- und einem Nehmerzylinder ausgebildet ist. Weiterhin ist sie als Stecker-Buchse-Verbindung ausgeführt, so dass diese Dämpfungseinrichtung auf einfache Weise in die Druckleitung zwischen einem Geber- und Nehmerzylinder einsetzbar ist. Diese in einem Gehäuse mit zwei Hydraulikanschlüssen untergebrachte Ventilanordnung besitzt zwei Ventilkörper, welche zwischen den Hydraulikanschlüssen im Gehäuse angeordnet sind. Der erste Ventilkörper mit einem Durchgangsweg für die Hydraulikflüssigkeit wird dabei mittels eines ersten Federelements in einer ersten Richtung gegen einen gehäusefesten Anschlag vorgespannt. Der zweite Ventilkörper wird mittels eines zweiten Federelements in entgegen gesetzter Richtung gegen einen Ventilsitz am ersten Ventilkörper vorgespannt, so dass dieser zweite Ventilkörper in einer Grundstellung der Ventilanordnung den Durchgangsweg im ersten Ventilkörper nahezu vollständig verschließt und bei einem Volumenstrom in der ersten Richtung vom Ventilsitz abhebt, um dessen Durchgangsweg zu öffnen. Zwischen erstem Ventilkörper und Gehäuse ist ein weiterer Durchgangsweg für Hydraulikflüssigkeit vorgesehen, wobei am gehäusefesten Anschlag ein weiterer Ventilsitz ausgebildet ist, gegen den der erste Ventilkörper federvorgespannt ist und von dem letzterer bei einem Volumenstrom in der Gegenrichtung abhebt, um den weiteren Flüssigkeitsdurchgangsweg in axialer Richtung zu öffnen.

Eine Dämpfungseinrichtung gemäß dem Oberbegriff des Anspruchs 1 wird in der DE 101 06 958 A1 offenbart, mit der zusätzlich zur Dämpfung von in das Druckmedium eingetragenen Schwingungen eine verbesserte Wirkungsweise hinsichtlich einer verminderten Geräuschanregung vorgeschlagen wird. Dazu wird in die den Geberzylinder mit dem Nehmerzylinder verbindende Druckmediumsleitung ein schaltendes Druckbegrenzungsventil mit zwei Anschlüssen zum Ein- und Auslass von Druckmedium eingebracht, das ebenfalls in Form einer Stecker-Buchse- Verbindung ausgeführt ist. Die Anschlüsse für Ein- und Auslass werden hierbei mit jeweils einem entsprechenden, in radialer Richtung verlaufenden Kanal verbunden, der in Abhängigkeit vom Druckmediumsdruck mittels eines elastischen Körpers dichtend verschließbar ist. Der elastische Körper wird über eine an einem Innenzylinder oder Außenzylinder der Stecker-Buchsen-Verbindung einmündende Öffnung dichtend angelegt. Dazu wird vorteilhafter Weise ein Schlauchabschnitt verwendet, der auf die Außenzylinderfläche aufgezogen oder in die Innenzylinderfläche nach innen radial außen dichtend eingebracht wird.

Diese als Stecker-Buchse-Verbindung vorgeschlagenen Lösungen benötigen zur Realisierung des dargestellten Grundprinzips eine entsprechende Anzahl von Bauteilen, woraus erhöhte Herstellungskosten resultieren.

Aus der US 3,451,422 ist ferner ein Rückschlagventil mit einem in einer umlaufenden Nut angeordneten O-Ring bekannt.

Die Aufgabe der Erfindung besteht darin, eine Vorrichtung vorzuschlagen, durch die in das Druckmedium eingetragene Druckspitzen gefiltert und gedämpft werden und die gleichzeitig kostengünstig herstellbar ist.

Diese Aufgabe wird mit einer Dämpfungseinrichtung mit den Merkmalen des Anspruchs 1 gelöst. Bevorzugte Ausführungsbeispiele der Erfindung sind in den abhängigen Ansprüchen dargelegt.

Danach besteht die Dämpfungseinrichtung aus einem in einem von einem Deckel verschlossenen Gehäuse mit einem Anschluss für einen Einlass und einen Anschluss für einen Auslass. In diesem Gehäuse ist lagefixiert ein Ventilkörper angeordnet, der in axialer Richtung zwei als Kanäle ausgebildete Bohrungen aufweist, wobei jeweils ein Kanal einem Anschluss zugeordnet ist. Diese Kanäle setzen sich aus zwei Kanalabschnitten zusammen. Ausgehend von einem Anschluss verlaufen sie im ersten Kanalabschnitt axial durch den Ventilkörper. Ihr zweiter Kanalabschnitt wird gebildet, indem sie jeweils im Endbereich des Ventilkörpers in einen radial angeordneten Kanal übergehen und der Ventilkörper an dieser Stelle Austrittsöffnungen aufweist. Außerdem sind die beiden Kanäle im Ventilkörper so angeordnet, dass deren Ein- und Ausgänge entgegengesetzt gerichtet sind. Die radiale Austrittsöffnung jedes Kanals wird von einem elastischen Körper verschlossen. Für diesen elastischen, als Dichtung fungierenden Körper wird kostengünstig ein O-Ring eingesetzt. Dieser verschließt die Austrittsöffnung des Kanals mit einem vorgegebenen Schließdruck. Übersteigt beim Kupplungsvorgang der Druck des Druckmediums diesen Schließdruck, wird die entsprechende Austrittsöffnung geöffnet und die Verbindung zum jeweils gegenüber liegenden Anschluss freigegeben.

Es ist weiterhin vorteilhaft, dass die sich in axialer Richtung erstreckenden Kanalabschnitte des Kanals zueinander beabstandet sind, ebenso wie die in radialer Richtung verlaufenden Kanalabschnitte. Auf diese Weise wird auf einfache Art und Weise dem Druckmedium eine vorbestimmte Richtung gegeben bzw. wird die Strömung geteilt.

Zur sicheren Abdichtung der radial verlaufenden Austrittsöffnungen weist der Ventilkörper jeweils in deren Bereich eine umlaufende Nut auf. In diese Nut wird ein als O-Ring ausgeführtes elastischer Körper eingebracht, so dass der Querschnitt der Nut außerhalb der Austrittsöffnungen der Kanalabschnitte der Form des O-Ringes angepasst ist. Die Austrittsöffnungen der Kanalabschnitte sind an dieser Stelle zur Bildung eines Dichtsitzes für den O-Ring mit unterschiedlich geneigten Flanken zur Horizontalen versehen. Dabei ist der Neigungswinkel der zu einem Anschluss gerichteten Flanke größer als der Neigungswinkel der gegenüberliegenden Flanke.an der Austrittsöffnung. Die Summe beider Neigungswinkel beträgt dabei 90° Durch diese Winkel wird einerseits gewährleistet, dass der O-Ring an beiden Flanken aufliegt und damit die Ausgangsöffnung des jeweiligen Kanals überdeckt und andererseits, dass der O-Ring nur über eine kurze Distanz abheben kann Die umlaufende Nut am Ventilkörper dient ansonsten dazu, den O-Ring lagegerecht zu fixieren und diesen unter einer Vorspannung in die Nut einzulegen, wodurch verhindert wird, dass dieser aus der Nut herausgedrückt wird.

Außerdem ist es zur Lagefixierung des Ventilkörpers vorteilhaft, dass an der Innenwand des Gehäuses im Bereich des Ein- und Auslasses mehrere Anschläge für den Ventilkörper vorgesehen sind und der Ventilkörper in radialer Richtung Nasen aufweist, mittels derer er axial fixiert und dabei gleichzeitig zentriert wird. Außerdem ist zur radialen Abdichtung gegenüber dem Gehäuse die Mantelfläche des Ventilkörpers mit einem Lamellenfußprofil ausgestattet.

Mit ihren im Gehäuse vorgesehenen Anschlüssen für einen Ein- und einen Auslass ist die Dämpfungseinrichtung in eine hydraulische Strecke einsetzbar. Eben so gut kann das Gehäuse eines Geberzylinders oder Nehmerzylinders genutzt werden, in den der erfindungsgemäße Ventilkörper eingesetzt wird.

Aus Kostengründen ist es günstig, zumindest das Gehäuse und den Deckel aus Kunststoff herzustellen. Diese Werkstoffwahl lässt es zu, die beiden Gehäuseteile durch Reib-, Laser- oder Ultraschweißung miteinander zu verbinden.

Weitere Vorteile und vorteilhafte Weiterbildungen der Erfindung sind Gegenstand der nachfolgenden Figuren sowie deren Beschreibungsteile.

Es zeigen:
- Figur 1: eine schematische Darstellung der erfindungsgemäßen Dämpfungseinrichtung im Schnitt,
- Figur 2: eine vergrößerte Darstellung der Einzelheit X aus Figur 1,
- Figur 3: eine schematische Darstellung einer weiteren Ausgestaltung der erfindungsgemäßen Dämpfungseinrichtung in einem Teilschnitt.

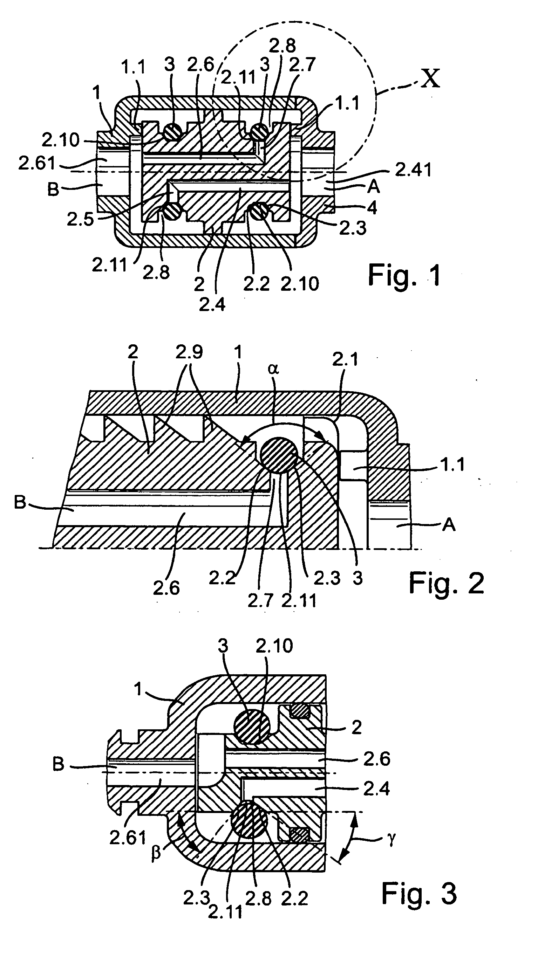

Die Figur 1 zeigt schematisch eine erfindungsgemäße Dämpfungseinrichtung im Schnitt. Diese besteht aus einem mit einem Deckel 4 abgeschlossenen Gehäuse 1 mit den Anschlüssen A und B für den Ein- und Auslass von Druckmedium, wobei der Einlass A mit einem nicht dargestellten Geberzylinder und der Auslass B mit einem nicht dargestellten Nehmerzylinder in Verbindung steht. Dabei ist der Einlass A durch einen Kanal 2.41 und der Auslass B durch einen Kanal 2.61 gekennzeichnet. Der Durchfluss von Druckmedium vom Kanal 2.41 zum Kanal 2.61 wird durch einen im Innern des Gehäuses 1 lagefixiert angeordneten Ventilkörper 2 behindert . Die Lagefixierung des Ventilkörpers 2 wird in axialer Richtung durch Anschläge 1.1 erreicht, die an den gegenüber liegenden Seitenfläche des Gehäuses 1 dafür vorgesehen sind. Dabei sind immer mehrere Anschläge 1.1 über die jeweilige Seitenfläche verteilt angeordnet. In radialer Richtung wird der Ventilkörper 2 zunächst mittels an diesem vorgesehener Nasen 2.1 zentriert (siehe Figur 2) und schließlich in das Gehäuse 1 eingepresst, wodurch dieser gleichzeitig gegenüber dem Gehäuse 1 stellenweise abgedichtet wird. Dazu weist die Mantelfläche des Ventilkörpers 2 ein lamellenfußartiges Profil auf, das mittels der Vergrößerung des Ausschnittes X in Figur 2 deutlich erkennbar ist.

Der Ventilkörper 2wird in axialer Richtung von zwei Kanälen 2.4 und 2.6 durchzogen, die so angeordnet sind, dass eine Verbindung mit den Kanälen 2.41 und 2.61 herstellbar ist. Allerdings durchziehen diese Kanäle 2.4 und 2.6 axial nicht die ganze Länge des Ventilkörpers 2 , sondern werden jeweils in dessen Endbereich durch radial nach außen führende Kanäle 2.5 und 2.7 weiter geführt. Somit wird der mit dem Kanal 2.41 verbundene Kanal 2.4 über den Kanal 2.5 weitergeführt und der mit dem Kanal 2.61 verbundene Kanal 2.6 über den Kanal 2.7. Aus dieser Figur ist weiterhin ersichtlich, dass die Austrittsöffnungen der Kanäle 2.5 und 2.7 dichtend verschließbar sind. Dazu ist der Ventilkörper 2 zur Bildung von Dichtsitzen 2.10 an den Stellen der Austrittsöffnungen dieser Kanäle 2.5 und 2.7 jeweils mit einer umlaufenden Nut 2.8 versehen, deren Breite größer als der Durchmesser des jeweiligen Kanals 2.5 bzw. 2.7 gewählt wird. Auf diese Weise kann die Nut 2.8 von einem Einschnitt konstanter Breite konisch bis auf die Breite des Kanaldurchmessers abfallen, so dass der jeweilige Dichtsitz 2.10 durch den von den Flanken 2.2 und 2.3 gebildeten konischen Bereich entsteht. In die so vorbereitete Nut 2.8 wird vorzugsweise eine als O-Ring ausgebildete elastische Dichtung 3 eingelegt. Vor dem Einbringen in die Nut 2.8 muss diese zunächst radial gedehnt werden, um auf die Mantelfläche des Ventilkörpers 2 aufgeschoben werden zu können. An der Stelle der Nut 2.8 kann sie radial auf den geringeren Nutgrunddurchmesser unter Vorspannung zurückschnappen, so dass ein Herausdrücken aus dieser nicht möglich ist. Dabei wird sie durch die konisch verlaufenden Flanken 2.2 und 2.3 einerseits zwangsgeführt, andererseits dienen diese, wie bereits erwähnt, zur Realisierung des Dichtsitzes 2.10 für den jeweiligen O-Ring 3. Auf diese Weise wird die Abdichtung der Kanäle 2.5 und 2.7 an den Austrittsöffnungen nicht nur realisiert, sondern außerdem erhöht.

Bei einer Betätigung eines nicht dargestellten Kupplungspedals wird ein Druck im Druckmedium aufgebaut. Dieser pflanzt sich über den nicht dargestellten Geberzylinder weiter im Kanal 2.41 des Einlasses A der Dämpfungseinrichtung fort, wo er über den Kanal 2.4 des Ventilkörpers 2 in den radial nach außen führenden Kanal 2.5 weitergeleitet wird, bis er mit seinem Druck die durch den O-Ring 3 verschlossene Austrittsöffnung öffnet, um weiter über den Kanal 2.61 zum Auslass B und damit zu einem nicht dargestellten Nehmerzylinder gelangen zu können.

Im Gegenzug dazu wird nach ausgeführtem Kupplungsvorgang der in der hydraulischen Strecke aufgebaute Druck vom Nehmerzylinder in Richtung Kupplungspedal abgebaut. Dabei gelangt der ins Druckmedium eingetragene Druck bzw. gelangen die Druckschwingungen über den Kanal 2.61 des Auslasses B in den Ventilkörper 2 und werden über die Kanal 2.6 zur Austrittsöffnung des Kanals 2.7 geleitet. Zum Öffnen dieser Austrittsöffnung muss der Druck im Druckmedium den Schließdruck des O-Rings 3 überwinden, wozu ein Anteil des Druckes erforderlich ist. Auf diese Weise werden Druckspitzen des Druckmediums in Richtung Kupplungspedal abgebaut..

Die Figur 2 stellt eine Vergrößerung des Ausschnitts X aus Figur 1 dar. Dieser Ausschnitt X stellt einen Teil der Dämpfungseinrichtung im Bereich des Einlasses A dar. Aus der Vergrößerung wird insbesondere die Lagerung des Ventilkörpers 2 im Gehäuse 1 mittels Lamellenfußprofil 2.9 und Nase 2.1 in radialer Richtung, sowie den Anschlägen in axialer Richtung deutlich sichtbar, wobei stellvertretend nur ein Anschlag 1.1 dargestellt ist. Außerdem ist der Dichtsitz 2.10 mit den Flanken 2.2 und 2.3 der Nut 2.8 deutlich erkennbar. Zur Optimierung der Dichtwirkung des O-Ringes 3 ist es vorteilhaft die Flanken 2.2 und 2.3 unter einem Winkel α von 90° anzuordnen.

Dieser Figur ist außerdem noch zu entnehmen, wie der Druck vom Nehmerzylinder in der Dämpfungseinrichtung weitergeleitet wird. Zunächst gelangt dieser über den Kanal 2.61 des Auslasses B in den Kanal 2.6, von dem er radial zur Austrittsöffnung des Kanals 2.7 weitergeleitet wird. Diese Austrittsöffnung wird durch einen mit einem unter Vorspannung stehenden O-Ring 3 verschlossen. Übersteigt der Druck einen definierten Schließdruck, wird der O-Ring 3 radial gedehnt und der Druck kann über den Kanal 2.41 des Einlasses A weiter in die hydraulische Strecke in Richtung Geberzylinder geleitet werden. Der Schließ- bzw. Öffnungsdruck ist dabei einstellbar durch verschiedene Parameter des O-Rings 3. So ist dieser von dessen Werkstoff und damit Elastizität, der Schnurstärke, sowie des Innendurchmessers, mit dem die Vorspannung vorbestimmt wird, abhängig.

Da die Druckdifferenz zwischen Auslass B und Einlass A relativ gering ist, wird eine Beschädigung des O-Rings 3 vermieden.

Die Figur 3 zeigt eine weitere Möglichkeit der Ausgestaltung der erfindungsgemäßen Dämpfungseinrichtung anhand eines Teilschnittes. Hierbei ist der Bereich des Auslasses B der Dämpfungseinrichtung dargestellt. Der Aufbau der Dämpfungseinrichtung entspricht im Wesentlichen dem in der Figur 1 dargestellten, so dass für die Bauteile die Bezeichnungen gleich bleiben. Der wesentliche konstruktive Unterschied zu Figur 1 besteht jedoch in der Ausbildung der beiden um den Umfang des Ventilkörpers 2 verlaufenden Nute 2.8, in die die als O-Ring ausgebildete Dichtung 3 zum Verschließen der jeweiligen Austrittsöffnung der Kanäle 2.5 und 2.7 eingelegt wird.

Zur Verringerung des Druckabfalls zwischen Einlass A und Auslass B wird die Form der umlaufenden Nut 2.8 außerhalb der Austrittsöffnung des Kanals 2.5 der Kontur des Innenbereiches des O-Ringes 3 angepasst, so dass diese im Schnitt im Wesentlichen halbkreisförmig ausgebildet ist; d.h., dass die komplette Dichtsitzfläche vom O-Ring 3 ausgefüllt wird. Im Bereich der Austrittsöffnung des Kanals 2.5 ist diese Nut 2.8 jedoch so ausgeführt, dass ein Dichtsitz 2.11 für den O-Ring 3 entsteht. Dieser Dichtsitz 2.11, der im Bereich des Ventilkörpers 2 liegt, wo der Kanal 2.6 in die Nut 2.8 übergeht, wird durch die Flanken 2.2 und 2.3 gebildet, die jeweils einen unterschiedlichen Neigungswinkel β und γ zur Horizontalen aufweisen. Dadurch sitzt der O-Ring 3 lediglich auf den Flanken 2.2 und 2.3 auf und das Druckmedium strömt vom Kanal 2.6 nur an der Seite des O-Rings 3 in den Kanal 2.61, dessen Flanke den größeren Neigungswinkel aufweist. Vorteilhafterweise sollte der Winkel γ zwischen 5° und 25 ° betragen, und die Summe aus beiden Winkeln β und γ bei 90°. Auf diese Weise wird eine optimale Geräuschminderung erzielt.

Auf Grund dieser unterschiedlich ausgeführten Auflage des O-Ringes 3 auf dem Umfang des Ventilkörpers in Form der Dichtsitze 2.10 und 2.11 ist gewährleistet, dass das Druckmedium des Kanals 2.6 den O-Ring 3 nur im Bereich des Dichtsitzes 2.11 aufdrücken kann. Dadurch werden Druckabfälle beim überströmen des O-Rings (3) verringert, indem der O-Ring 3 nicht über einen großen Umfang sondern nur über eine kurze Distanz abhebt.

Somit treten lediglich an diesem, am Dichtsitz 2.11 erzielbaren, schmalen Spalt zwischen O-Ring 3 und der Austrittsöffnung höhere Druckabfälle auf als am umfänglichen Dichtsitz 2.10 des O-Rings 3.

Die Herstellung dieser Dämpfungseinrichtung ist besonders kostengünstig, da sie aus wenigen Teilen besteht, wobei der Ventilkörper separat als Einzelteil gefertigt werden kann und danach nur noch in das Gehäuse 1 eingesetzt werden muss. Kostengünstig wirkt sich außerdem aus, dass als Dichtungen 3 herkömmliche O-Ringe einsetzbar sind. Außerdem sind sowohl der Ventilkörper 2 als auch das Gehäuse 1 mit dem Deckel 4 aus Kunststoff herstellbar. Somit kann das Gehäuse 1 mittels Reib-, Laser oder Ultraschallschweißung mit dem Deckel 4 dicht und unlösbar verbunden werden.

### Bezugszeichenliste

- 1: Gehäuse
- 1.1: Anschlag
- 2: Ventilkörper
- 2.1: Nasen
Flanken
Flanken
Kanalabschnitt in axialer Richtung
- 2.41: Kanal zur Einlassöffnung
Kanalabschnitt in radialer Richtung
Kanalabschnitt in axialer Richtung
- 2.61: Kanal zur Auslassöffnung
Kanalabschnitt in radialer Richtung
Nut
Lamellenfußprofil
Dichtsitz
Dichtsitz
- 3: elastischer Körper / Dichtung
- 4: Deckel
- α: Winkel / Neigungswinkel
- β: Winkel / Neigungswinkel
- γ: Winkel / Neigungswinkel
- A: Einlassöffnung
- B: Auslassöffnung

## Patentansprüche

1. Dämpfungseinrichtung für eine hydraulische Strecke zur Kupplungsbetätigung eines Kraftfahrzeuges, mit einem Gehäuse (1) mit mindestens zwei Anschlüssen (A, B) zum Ein- und Auslass von Druckmedium, die mittels mindestens eines Kanals (2.4/2.5, 2.6/2.7) miteinander verbindbar sind, wobei mindestens ein Kanal (2.4/2.5, 2.6/2.7) zu einem Anschluss (A, B) mittels eines elastischen Körpers (3) dichtend verschließbar ist und jeweils der dem Anschluss (A, B) zugeordnete Kanal (2.4/2.5, 2.6/2.7) von einer Bohrung gebildet ist, die in einen im Gehäuse (1) lagefixierten Ventilkörper (2) eingebracht ist, **dadurch gekennzeichnet, dass** der als Dichtung ausgebildete elastische Körper (3) ein O-Ring ist, dass der Ventilkörper (2) im Bereich einer Austrittsöffnung des Kanals (2.4/2.5, 2.6/2.7) eine umlaufende Nut (2.8) aufweist, dass an der Austrittsöffnung des Kanals (2.4/2.5, 2.6/2.7) ein Dichtsitz (2.10) mit zwei Flanken (2.2, 2.3) gebildet ist, dass die erste, auf Seiten des Anschlusses (A, B) angeordnete Flanke (2.3) einen ersten Winkel (β) und die zweite, der ersten Flanke (2.3) gegenüberliegende Flanke (2.2) einen zweiten Winkel (γ) zur Horizontalen bildet, dass der erste Winkel (β) größer als der zweite Winkel (γ) ist, und dass die Summe beider Winkel (β, γ) 90° beträgt.

2. Dämpfungseinrichtung nach Anspruch 1, **dadurch gekennzeichnet, dass** sich jeder Kanal (2.4/2.5, 2.6/2.7) aus zwei Kanalabschnitten zusammensetzt, wobei ausgehend vom jeweiligen Anschluss (A, B) der jeweils axial im Ventilkörper (2) verlaufende Kanalabschnitt (2.4, 2.6) den ersten Kanalabschnitt definiert, und ein in der Nähe dessen jeweils anderen Endes radial nach außen gerichteter Kanalabschnitt (2.5, 2.7) den zweiten Kanalabschnitt definiert.

3. Dämpfungseinrichtung nach Anspruch 2, **dadurch gekennzeichnet, dass** die axial verlaufenden Kanalabschnitte (2.4, 2.6) in radialer Richung und die radial verlaufenden Kanalabschnitte (2.5, 2.7) in axialer Richtung zueinander beabstandet sind.

4. Dämpfungseinrichtung nach einem der Ansprüche 1 bis 3, **dadurch gekennzeichnet, dass** die Form der umlaufenden Nut (2.8) dem Profil des O-Rings angepasst ist.

5. Dämpfungseinrichtung nach einem der Ansprüche 1 bis 4, **dadurch gekennzeichnet, dass** der zweite Winkel (γ) zwischen 5° und 25° beträgt.

6. Dämpfungseinrichtung nach einem der Ansprüche 1 bis 5, **dadurch gekennzeichnet, dass** das Gehäuse (1) im Bereich der Anschlüsse (A, B) an der Innenwand in axialer Richtung mit Nasen (1.1) versehen ist.

7. Dämpfungseinrichtung nach einem der Ansprüche 1 bis 6, **dadurch gekennzeichnet, dass** die Mantelfläche des Ventilkörpers (2) mit einem Lamellenfußprofil (2.9) ausgestattet ist.

8. Dämpfungseinrichtung nach einem der Ansprüche 1 bis 7, **dadurch gekennzeichnet, dass** das Gehäuse (1) von einem Deckel (4) abgeschlossen ist, der mit einer Bohrung für einen der Anschlüsse (A, B) versehen ist.

9. Dämpfungseinrichtung nach einem der Ansprüche 1 bis 8, **dadurch gekennzeichnet, dass** mindestens einer der Anschlüsse (A, B) in das Gehäuse (1) eingearbeitet ist.

10. Dämpfungseinrichtung nach Anspruch 8 oder 9, **dadurch gekennzeichnet, dass** zumindest das Gehäuse (1) und der Deckel (4) aus Kunststoff hergestellt sind.

11. Dämpfungseinrichtung nach einem der Ansprüche 1 bis 10, **dadurch gekennzeichnet, dass** der Ventilkörper (2) in das Gehäuse (1) eines Geber- oder Nehmerzylinders integriert ist.

## Claims

1. Damping device for a hydraulic line for actuating the clutch of a motor vehicle, with a housing (1) having at least two connections (A, B) for the inlet and outlet of pressure medium, which are connectable to one another by means of at least one duct (2.4/2.5, 2.6/2.7), at least one duct (2.4/2.5, 2.6/2.7) to one connection (A, B) being sealingly closable by means of an elastic body (3), and in which case the duct (2.4/2.5, 2.6/2,7) assigned to the connection (A, B) being formed by a bore which is introduced into a valve body (2) fixed in position in the housing (1), **characterized in that** the elastic body (3) designed as a seal is an 0-ring, **in that** the valve body (2) has a peripheral groove (2.8) in the region of an exit port of the duct (2.4/2.5, 2.6/2.7), **in that** a sealing seat (2.10) with two flanks (2.2, 2.3) is formed at the exit port of the duct (2.4/2.5, 2.6/2.7), **in that** the first flank (2.3) arranged at the sides of the connection (A, B) forms a first angle (β) to the horizontal and the second flank (2.2) lying opposite the first flank (2.3) forms a second angle (γ) to the horizontal, **in that** the first angle (β) is larger than the second angle (γ), and **in that** the sum of the two angles (β, γ) amounts to 90°.

2. Damping device according to Claim 1, **characterized in that** each duct (2.4/2.5, 2.6/2.7) is composed of two duct portions, in this case, starting from the respective connection (A, B), the duct portion (2.4, 2.6) running in each case axially in the valve body (2) defines the first duct portion, and a duct portion (2.5, 2.7) directed radially outwards in each case in the vicinity of the other end of the latter defines the second duct portion.

3. Damping device according to Claim 2, **characterized in that** the axially running duct portions (2.4, 2.6) are spaced apart from one another in the radial direction and the radially running duct portions (2.5, 2.7) are spaced apart from one another in the axial direction.

4. Damping device according to one of Claims 1 to 3, **characterized in that** the shape of the peripheral groove (2.8) is adapted to the profile of the O-ring.

5. Damping device according to one of Claims 1 to 4, **characterized in that** the second angle (γ) amounts to between 5° and 25°.

6. Damping device according to one of Claims 1 to 5, **characterized in that** the housing (1) is provided with noses (1.1) in the axial direction on the inner wall in the region of the connections (A, B).

7. Damping device according to one of Claims 1 to 6, **characterized in that** the surface area of the valve body (2) is equipped with a finned profile (2.9).

8. Damping device according to one of Claims 1 to 7, **characterized in that** the housing (1) is closed off by a cover (4) which is provided with a bore for one of the connections (A, B).

9. Damping device according to one of Claims 1 to 8, **characterized in that** at least one of the connections (A, B) is incorporated into the housing (1).

10. Damping device according to Claim 8 or 9, **characterized in that** at least the housing (1) and the cover (4) are produced from plastic.

11. Damping device according to one of Claims 1 to 10, **characterized in that** the valve body (2) is integrated into the housing (1) of a master or slave cylinder.

## Revendications

1. Dispositif d'amortissement pour une trajectoire hydraulique en vue de l'actionnement d'un embrayage d'un véhicule automobile, comprenant un boîtier (1) avec au moins deux raccordements (A, B) pour l'entrée et la sortie de fluide sous pression, lesquels raccordements peuvent être raccordés les uns aux autres au moyen d'au moins un canal (2.4/2.5, 2.6/2.7), au moins un canal (2.4/2.5, 2.6/2.7) conduisant à un raccordement (A, B) pouvant être fermé de manière hermétique au moyen d'un corps élastique (3) et à chaque fois le canal (2.4/2.5, 2.6/2.7) associé au raccordement (A, B) étant formé par un alésage pratiqué dans un corps de soupape (2) fixé en position dans un boîtier (1), **caractérisé en ce que** le corps élastique (3) réalisé sous forme de joint d'étanchéité est un joint torique, **en ce que** le corps de soupape (2) présente, dans la région d'une ouverture de sortie du canal (2.4/2.5, 2.6/2.7), une rainure périphérique (2.8), **en ce qu'**un siège d'étanchéité (2.10) avec deux flancs (2.2, 2.3) est formé au niveau de l'ouverture de sortie du canal (2.4/2.5, 2.6/2.7), **en ce que** le premier flanc (2.3) disposé du côté du raccordement (A, B) forme un premier angle (β) et le deuxième flanc (2.2) opposé au premier flanc (2.3) forme un deuxième angle (γ) par rapport à l'horizontale, **en ce que** le premier angle (β) est supérieur au deuxième angle (γ), et **en ce que** la somme des deux angles (β, γ) vaut 90°.

2. Dispositif d'amortissement selon la revendication 1, **caractérisé en ce que** chaque canal (2.4/2.5, 2.6/2.7) se compose de deux portions de canal, et, partant de chaque raccordement (A, B), la portion de canal (2.4, 2.6) s'étendant respectivement axialement dans le corps de soupape (2) définissant la première portion de canal, et une portion de canal (2.5, 2.7) orientée radialement vers l'extérieur à proximité de son autre extrémité respective définissant la deuxième portion de canal.

3. Dispositif d'amortissement selon la revendication 2, **caractérisé en ce que** les portions de canal (2.4, 2.6) s'étendant axialement sont espacées l'une de l'autre dans la direction radiale et les portions de canal (2.5, 2.7) s'étendant radialement sont espacées l'une de l'autre dans la direction axiale.

4. Dispositif d'amortissement selon l'une quelconque des revendications 1 à 3, **caractérisé en ce que** la forme de la rainure périphérique (2.8) est adaptée au profilé du joint torique.

5. Dispositif d'amortissement selon l'une quelconque des revendications 1 à 4, **caractérisé en ce que** le deuxième angle (γ) est compris entre 5° et 25°.

6. Dispositif d'amortissement selon l'une quelconque des revendications 1 à 5, **caractérisé en ce que** le boîtier (1) est pourvu de nez (1.1) dans la région des raccordements (A, B) au niveau de la paroi interne dans la direction axiale.

7. Dispositif d'amortissement selon l'une quelconque des revendications 1 à 6, **caractérise en ce que** la surface d'enveloppe du corps de soupape (2) est munie d'un profilé de base à lamelles (2.9).

8. Dispositif d'amortissement selon l'une quelconque des revendications 1 à 7, **caractérisé en ce que** le boîtier (1) est fermé par un couvercle (4) qui est pourvu d'un alésage pour l'un des raccordements (A, B).

9. Dispositif d'amortissement selon l'une quelconque des revendications 1 à 8, **caractérisé en ce qu'**au moins l'un des raccordements (A, B) est incorporé dans le boîtier (1).

10. Dispositif d'amortissement selon la revendication 8 ou 9, **caractérisé en ce qu'**au moins le boîtier (1) et le couvercle (4) sont fabriqués en plastique.

11. Dispositif d'amortissement selon l'une quelconque des revendications 1 à 10, **caractérisé en ce que** le corps de soupape (2) est intégré dans le boîtier (1) d'un maître-cylindre ou d'un cylindre récepteur.
